# EUROPEAN PATENT SPECIFICATION

(11) **EP 2 362 161 B1**
(45) Date of publication and mention of the grant of the patent: **07.11.2012**
(21) Application number: 10169137.6
(22) Date of filing: 09.07.2010
(51) Int. Cl.: F24J 2/52

(54) **Panel mounting system**
Panelmontagesystem
Système de montage de panneaux

(30) Priority: 22.02.2010 BE 201000110
(43) Date of publication of application: 31.08.2011
(73) Proprietor: B&L, 3920 Lommel (BE)
(72) Inventor: Bienstman, Marc, B-2400, Mol (BE)
(74) Representative: Sarlet, Steven Renaat Irène

(56) References cited:
- EP-A1- 1 947 402
- EP-A2- 2 182 303
- WO-A1-2009/137809
- WO-A2-2007/079382
- DE-A1-102008 004 179
- DE-U1-202007 016 366
- DE-U1-202008 002 346
- DE-U1-202008 009 192
- DE-U1-202008 014 274
- JP-A- 2000 064 523

## Description

### TECHNICAL FIELD

The invention relates to a panel mounting system for mounting a plurality of panels on a substantially flat surface and under a predefined angle thereto, comprising the technical features of the preamble of the first claim.

### BACKGROUND ART

Several panel mounting systems for mounting a plurality of panels on a flat surface, in particular solar panels mounted on a flat roof of a building, are known in the art. In recent years there is an enormous demand for panel mounting systems, in particular for mounting solar panels on roofs of industrial buildings. The large demand had led many companies to design, produce and install such panel mounting systems. It is a challenge to provide panel mounting systems at a reasonable cost, and to be able to deliver and install the panels in large quantities, without degrading the rigidity of the mounting system. The latter is especially important since such panel mounting systems are sometimes exposed to heavy wind. The system should be constructed in such a way that the panels are prevented from loosening, but also that the entire construction is prevented from shifting or being lifted, not only because the panels are very expensive, but also because panels or even the entire construction falling down from a roof would cause major damage or injury.

Some of the panel mounting systems described in the art are fastened to the roof, e.g. by drilling through the roof top. A disadvantage of such a system is that it damages the roof, and the drilling and fastening increases the installation time and effort.

Other panel mounting systems approach the problem of shifting by deliberately providing heavy systems. A disadvantages of such a system is that it puts extra weight on top of the roof for which the roof might not be designed, which increases the material cost and requires more installation time because heavy parts are not so easy to transport and manipulate.

EP1914490 describes an assembly with solar modules adapted to be placed on top of a flat roof. The assembly comprises a support frame for sloping solar module panels, with two upper sides and a base. A connection is made between lower edges of the sloping solar modules and the roof covering. The second side of the assembly is made of sheet metal. It lies opposite the solar modules and slopes down in the opposite direction. A disadvantage of such a construction (which is typically screwed or welded, although this is not specified) is that it requires much time to assemble, even if pre-assembled in the factory, and requires additional time for connecting the panels thereto, which is typically done in situ.

DE 20 2007 016 366 U describes a panel mounting system comprising base profiles mounted on roof profiles. Supporting profiles are mounted on the base profiles and wind plates are assembled with the supporting profiles.

JP 2000 064523 A describes an assembly comprising channel-shaped frames on which are installed brackets comprising a holding portions for holding a solar cell panel.

EP 1 947 402 A describes a panel mounting system comprising inclined spars fixed on feet and transversal cross members assembled on the spars by means of intermediate coupling pieces that can be coupled by pressure.

### DISCLOSURE OF THE INVENTION

It is an object of the present invention to provide a panel mounting system for mounting a plurality of panels on a substantially flat surface and under a predefined angle thereto that can be produced and installed more quickly, without lowering its rigidity.

This is achieved according to the present invention with the panel mounting system of the first claim. Thereto the panel mounting system according to the present invention comprises:
- a plurality of elongated profiles placed parallel to and at a predefined distance from each other on the substantially flat surface;
- a plurality of wind plates mounted to the elongated profiles, each wind plate being adapted for supporting a first side of the panel to prevent it from bending;
- a plurality of panels mounted to the wind plates at the first side, and to the elongated profiles at a second side of the panels, opposite the first side;
   wherein:
- the panel mounting system further comprises a plurality of brackets, each bracket being adapted to be engaged with one elongated profile via first screwless cooperating engaging means, and comprising a U-shape for holding an edge of at least one panel;
- each wind plate being oriented in a plane transverse to the elongated profiles, and being engaged with two parallel elongated profiles via second screwless cooperating engaging means;
- the panel mounting system further comprises a plurality of holding profiles mounted to the wind plates for securing the panels to the wind plates, thereby immobilizing the parts of the panel mounting system.

By providing brackets, wind plates and elongated profiles having first resp. second screwless cooperating engaging means, such as e.g. a pen that is inserted in an opening or other tenon-and-mortise joints, the brackets and wind plates can be quickly mounted to the elongated profiles. By providing brackets having a U-shape, an edge of the panels can be easily shifted in the brackets to hold the panels at one side (e.g. the lower side) while at the same time securing the position of the bracket in the elongated profile. The panels can rest at another side (e.g. the upper side) upon the wind plates and can be fastened thereto by means of a holding profile mounted to the wind plate, e.g. by using only two screws per panel. This entire setup can be performed much faster than with traditional panel mounting systems, which typically have elements that are welded together at multiple places, or are joined by fastening a lot of screws. And this can be achieved without using complex fastening means.

Instead of using a three-dimensional frame whereto the panel is attached, according to the invention the panel itself is used as part of the mounting system, in particular by shifting it in the brackets and by placing it on the wind plate, thereby securing the position of the brackets and the wind plate. This saves material cost and weight, and also time to produce, transport and install the mounting system. With the panel mounting system of the present invention, the panel is mounted at the same time as building its support structure.

Besides supporting a side of the panels to prevent them from bending, the wind plates also serve to prevent a wind blowing in a direction towards the wind plates and over the panels (in case of solar panels i.e. a wind coming from the north) from blowing under the panels, which could exert a force with an upward component upon the panels. By preventing this lifting force, the wind plates allow the weight of the construction to be reduced, without increasing the risk of the panels or the entire construction being lifted. Using lightweight elements is cheaper (material cost) and faster (labor cost) during installation, because they are easier to transport and to manipulate.

The inventor has surprisingly found that it is not required to support two opposite sides of the panels over their full length, but that supporting one entire side and two edges of the opposite side of the panel is sufficient. By using brackets to support these panel edges, additional elongated profiles extending over the entire second panel side can be omitted. This again saves material cost and time and effort for producing, transporting, placing and fastening them.

The components of the panel mounting system of the present invention, a.o. the elongated profiles, the wind plates, the brackets and the holding profiles can be simply and quickly manufactured using standard, highly automated equipment.

Preferably the first screwless cooperating engaging means comprises a protrusion of the bracket adapted for fitting into a first opening of the elongated profile, so that the bracket can be mounted to the elongated profile by inserting the protrusion in the opening without fastening any screws.

An additional benefit is that no fastening tools are required for this mounting, thus time for gathering such tools, transporting them, packing, unpacking and using them can be saved.

Another additional advantage is that such tools often get lost or are simply forgotten, especially when working ex factory, in which case a worker cannot continue with his usual work, and the installation team looses time.

Preferably the protrusion of the bracket has a particular shape so that the bracket needs to be tilted or rotated when the protrusion is inserted in the first opening of the elongated profile, and is prevented from tilting or rotating after it is engaged with the panel. In this way, the brackets can be mounted and secured to the elongated profiles in a fast and easy way, and without requiring additional tools or fastening means (such as e.g. screws).

Preferably the protrusion of the bracket has a curved or bended shape. In addition, by choosing a proper shape and dimensions, the bracket will in its engaged position be oriented under the predefined angle α w.r.t. the substantially flat surface. This leads to a mounting system having a higher stability and showing less vibration under windy conditions. In this way also hindering noise and metal fatigue is avoided, because the bracket can rest upon the elongated profile.

Preferably the second screwless cooperating engaging means comprises a protrusion of the wind plate adapted for fitting into a second opening of the elongated profile. In this way, the wind plates can be mounted to the elongated profiles in a fast and easy way, and without requiring additional tools or fastening means (such as e.g. screws). After the panel is mounted to the wind plate and the holding profile is fastened thereto, the position of the wind plate w.r.t. the elongated profiles is secured.

In an embodiment each elongated profile comprises a rubber mat for easy placement of the elongated profiles on top of the substantially flat surface, and for preventing it from shifting over the substantially flat surface under windy conditions, for example by glueing a rubber strip to the elongated profile. In this way the elongated profiles simply need to be placed on top of the flat surface, without aligning a mat there under, thus saving time. Another advantage of such a rubber mat or strip is that it helps to prevent damage to the surface material such as can e.g. be caused by sharp edges of the elongated profiles.

In another embodiment the panel mounting system of the present invention further comprises a plurality of mounting bases adapted to be placed on the substantially flat surface, each mounting base adapted for supporting an elongated profile to allow water present on the substantially flat surface to flow under the elongated profiles. The inventor has found that a small elevation (such as e.g. 6 - 8 mm) offers the advantage of allowing rain water (or melting snow water or the like) to pass under the elongated profiles instead of remaining between the elongated profiles (e.g. on a roof), and found that this elevation has a negligible influence on the streamlines of the wind, and thus upon the forces exerted upon the panel mounting system.

Preferably each mounting base has a shape for holding ballast weight placed on top of the elongated profiles to prevent the wind from lifting the panel mounting system. By adding ballast weight, the risk that a heavy wind will lift the panel mounting system is reduced. This ballast weight can easily and elegantly be placed on the mounting bases.

Preferably, each mounting base has a protrusion adapted for engaging in a longitudinal slit of the elongated profile for allowing the elongated profile to expand or shrink in the longitudinal direction under varying temperature conditions. By allowing the elongated profiles to expand or shrink on the mounting bases, damage to the surface material caused by this thermal expansion and compression can be prevented, because the mounting bases remain in their fixed position with respect to the flat surface. An additional advantage of these protrusions and slits is that they can help to speed-up the assembly process, by avoiding the need for measuring the intended distance between the mounting bases, which distance can simply be derived from the position of the slits, thus saving time during installation.

Preferably the holding profiles have an angular or curved surface showing an angles λ of 158° - 168° to the wind plates when mounted thereto, for increasing turbulence when the wind blows towards the wind plates and over the panels, for reducing a lifting force acting upon the panels caused by the wind. By deliberately choosing a holding profile having a shape that causes or increases turbulence when the wind blows over the top of the wind plate towards the panel, (in case of solar panels directed to the south this means a wind coming from the north), laminar air-flow over the panels which would cause under-pressure, is deliberately disturbed in such a way that the under-pressure above the panel is reduced. In other words, the upward directed force component acting upon the panels is reduced. In fact, the turbulence is advantageously created over the entire panel side, not only at the location of the holding profile, as the panel edge shows substantially the same angle with the wind plate. This allows a reduction of the weight of the panel mounting system, thus reducing material cost and relaxing the mechanical strength requirements of the surface, such as e.g. a roof. This also allows easier and faster installation of the mounting system, as lightweight parts are easier to manipulate. Or alternatively, for a given weight, the panel mounting system of the present invention can withstand a higher wind speed.

Preferably the panels are organized in one or more panel rows, each panel row comprising at least one panel and further comprising two side panels of a substantially triangular shape, each side panels being located at an outer end of the panel row, and being mounted to a corresponding elongated profile using third screwless cooperating engaging means and to a wind plate; - each wind plate has at least one elongated flap-and-opening oriented substantially parallel to the substantially flat surface, for creating an under-pressure underneath the panel due to the venturi-effect, when the wind blows over the panel and the holding profile, and over the flap-and-opening. When the wind blows towards the wind plate, (in case of solar panels directed to the south this means a wind coming from the south), the air flowing over the top of the holding profile will not "touch" the panel of the next panel row at its second side but somewhat further, thus an upward directed force is exerted upon the panels, which upward directed force is reduced by the under-pressure created beneath the panel due to the venturi-effect, when the wind blows over the opening. By substantially closing the panel row at its opposite sides, the under-pressure will create a desired suction force exerted upon the wind plates and upon the panel.

Preferably the side panels are mounted to the elongated profiles by third screwless cooperating engaging means, such as e.g. a protrusion of the side panel adapted for fitting in a third opening of the elongated profile, allowing for a very fast and easy mounting. Optionally the protrusion has a curved shape or a bended edge, so as to provide a securing means, improve the stability, and reduce vibrations.

Preferably the panels are rectangular panels having two long sides and two short sides, and are oriented in such a way that the long sides of the panels are substantially parallel to the flat surface. As used herein, the terms "long" and "short" should not be interpreted in absolute terms, but are used merely to describe which of the sides are longer than the other. Theoretically, the net total panel surface area exposed in a certain direction is the same for panels oriented with their long side parallel to the surface, or their short side, when taking the shadow area of neighboring panel rows into account. The inventor has found however that by placing the panels with their long side parallel to the surface, the forces exerted upon the panels are lower than in the case where the short sides are parallel to the surface. This allows the panel support structure to be made of a lighter material, which is cheaper (material cost), but also easier to transport, manipulate and assemble (labor cost). Another advantage is that the panels are supported at their long side, thereby reducing the stress exerted upon the panel and thus the risk for bending or breaking, which should not be neglected as such panels are exposed to outside weather conditions for many years.

### BRIEF DESCRIPTION OF THE DRAWINGS

Fig. 1 shows a perspective view on a panel mounting system according to the present invention holding twenty panels organized in four rows of five panels each.
Figures 2A-2E show different views on one panel element of the panel mounting system of Fig 1, whereby elongated profiles are placed on mounting bases.
Figures 3A-3E show different views on a variant of the panel element of Fig 2, whereby the elongated profiles are placed on a flat surface directly, without using mounting bases.
Fig. 4 shows an exploded view of the panel element of Fig 2A.
Fig. 5A shows a preferred embodiment of a bracket used in the panel mounting system of the present invention, in perspective view.
Figures 5B-5D show a sequence of steps of how to mount the bracket of Fig 5A to the elongated profile, in perspective view (below) and side view (middle).
Fig 5E shows an alternative embodiment of a bracket that can be used in the panel mounting system of the present invention.
Figures 6A-6D show a sequence of steps of how to interconnect two elongated profiles using a profile interconnect.
Fig. 7 shows a preferred embodiment of a mounting base of Fig. 2 in more detail.
Figures 8A-8C show (from left to right) a sequence of steps of how to mount the elongated profile in the mounting base of Fig 7, in a front view (top), an upper view (middle) and perspective view (bottom).
Figures 9 and 10 show a detailed view of a preferred mounting of the elongated profiles and the mounting base of Figures 8C, in front view and upper view respectively.
Figures 11A and 11B show the wind plate used in Fig 2 in perspective view in more detail.
Figures 11C-11E show a sequence of steps of how to mount the wind plate of Fig 2 to the elongated profile.
Fig. 12A shows in more detail how the holding profile of Fig 2 can be mounted to the wind plate.
Figures 12B-12E show how the holding profile of Fig 12A is mounted to the wind plate and fixing the panel, in perspective view, top view, side view and enlarged side view respectively.
Figures 13A-13C show a sequence of steps of how to mount a side panel of the panel mounting element of Fig 2, in perspective view (left) and in front view (right).
Fig 14A and Fig 14B show a preferred embodiment of a means for holding and routing cables underneath the panel.
Fig 14C shows an alternative embodiment of a wind plate having a cable groove.
Figures 15A-15D show the air flow of a wind coming from the south, blowing over the panel mounting system of Fig 1.

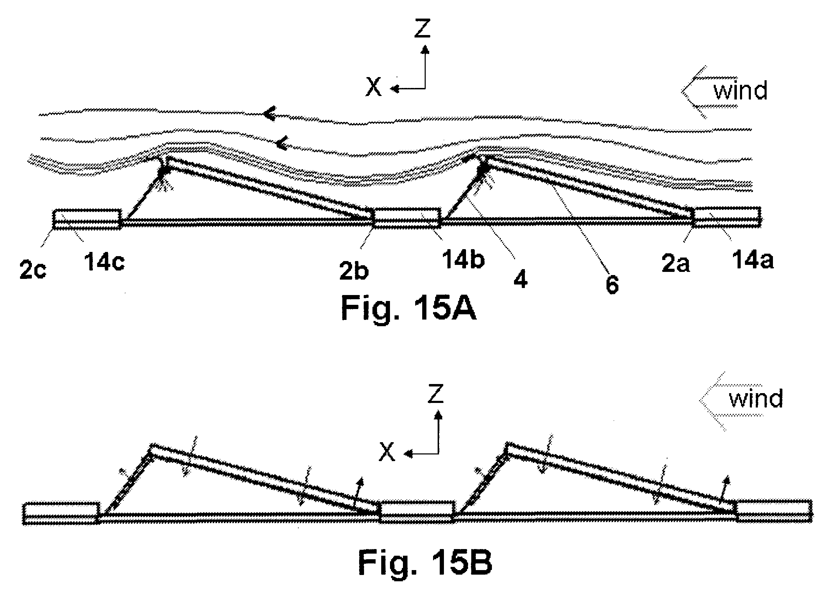

Fig 15A shows the air flow over two consecutive panel rows.
Fig 15B shows the forces exerted upon the panel mounting system corresponding to the air flow of Fig 15A.

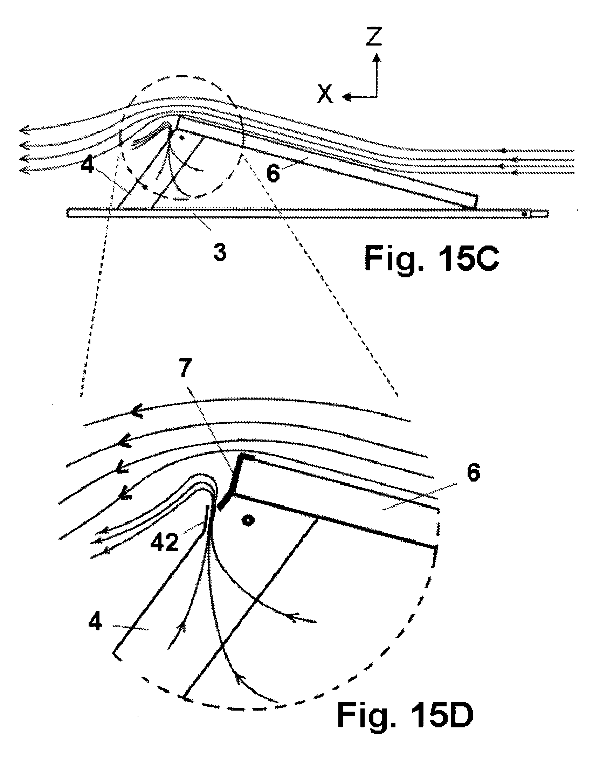

Fig 15C and 15D show the venturi-effect of the flap-and-opening of the wind plate in more detail.

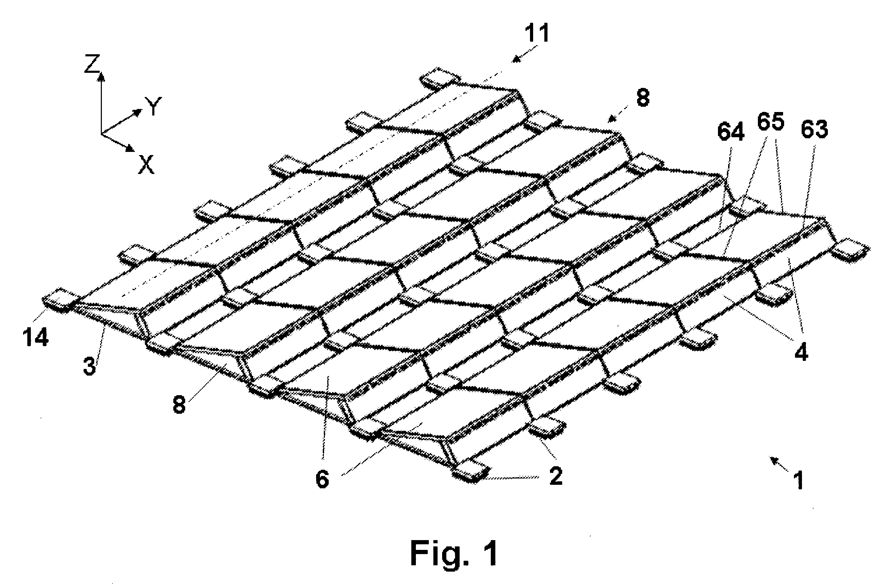

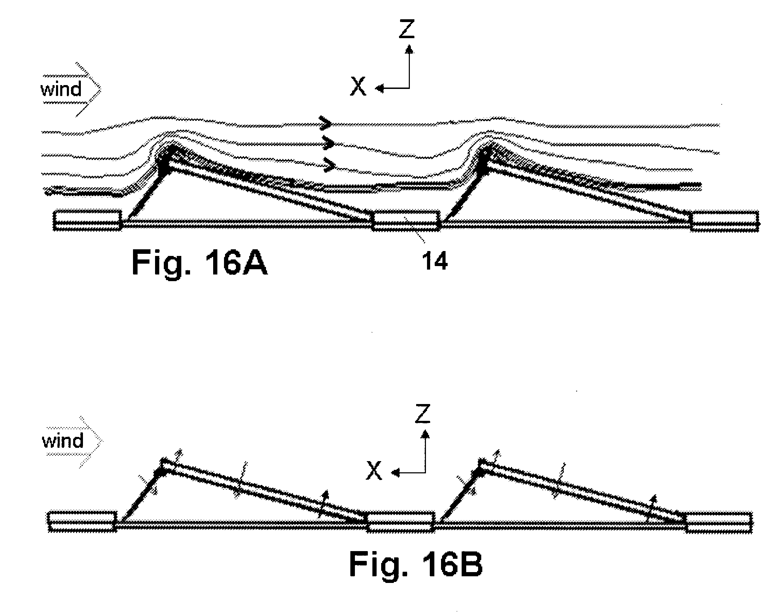

Figures 16A-16D show the air flow of a wind coming from the north, blowing over the panel mounting system of Fig 1.
Fig 16A shows the air flow over two consecutive panel rows.
Fig 16B shows the forces exerted upon the panel mounting system corresponding to the air flow of Fig 16A.

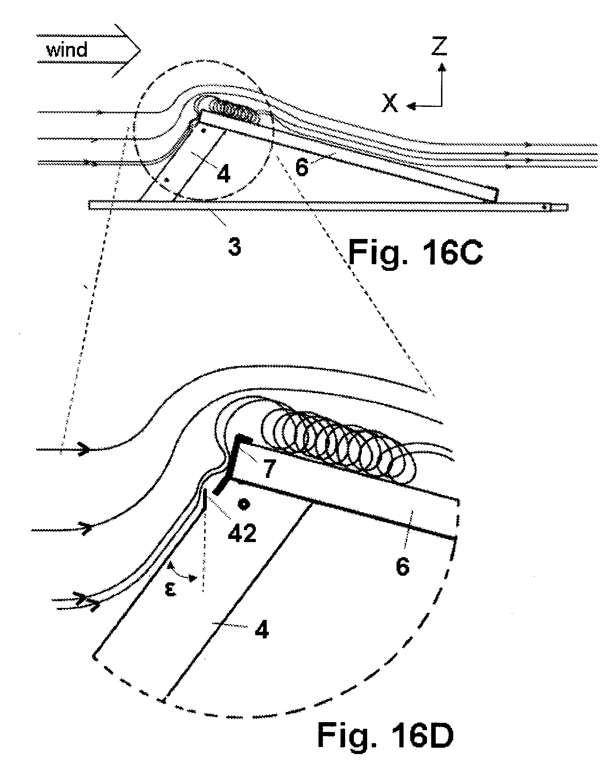

Fig 16C and 16D show the turbulences caused by the flap-and-opening and by the holding profile in more detail.

### DETAILED DESCRIPTION OF PREFERRED EMBODIMENTS

### REFERENCES

- 1: panel mounting system
- 11: panel row
- 12: screw
- 13: flat surface
- 14: ballast
- 2: mounting base
- 21: support surface (for ballast)
- 22: support surface (for elongated profile)
- 23: protrusion
- 24: rubber mat
- 25: height
- 26: groove
- 3: elongated profile
- 31: first opening (for the bracket)
- 32: second opening (for the wind plate)
- 33: third opening (for the side panel)
- 34: rubber mat
- 35: longitudinal slit (for the base)
- 36: profile interconnect
- 37: height
- 4: wind plate
- 41: protrusion
- 42: flap-and-opening
- 43: first mounting hole (for holding profile)
- 44: second mounting hole (for side panel)
- 46: plastic fastening strip
- 47: cable groove
- 48: third opening
- 491: main part
- 492: top part
- 493: side parts
- 494: back part
- 5: bracket
- 51: protrusion
- 52: surface
- 6: panel
- 61: first edge
- 62: second edge
- 63: first side
- 64: second side
- 65: short side
- 7: holding profile
- 71: curved of bended edge
- 72: mounting holes
- 73: screw
- 701: first segment
- 702: second segment
- 703: third segment
- 8: side panel
- 81: protrusion
- 82: opening

Figure 1 shows an example of a panel mounting system 1 according to the present invention in perspective view. The panel mounting system 1 of this example holds twenty panels 6 organized in a contiguous array of four rows 11 of five panels 6 each, but the present invention will also work for another number of panels 6 per row, such as e.g. any number in the range of 1-20, i.e. 1, 2, 3, 4, 5, 6, 7, 8, 9, 10, 11, 12, 13, 14, 15, 16, 17, 18, 19, 20, but more than 20 is also possible, e.g. 22, 25, 30, 40, 50, 60, 70, 80, 90, 100, but more than 100 is also possible; and any number of rows 11, such as e.g. any number in the range of 1-20, i.e. 1, 2, 3, 4, 5, 6, 7, 8, 9, 10, 11, 12, 13, 14, 15, 16, 17, 18, 19, 20, but more than 20 is also possible, e.g. 22, 25, 30, 40, 50, 60, 70, 80, 90, 100, but more than 100 rows is also possible,. A panel row 11 of only one panel 6 can e.g. occur when building around a chimney. Preferably the panels 6 in a row 11 are placed in a substantially side-by-side relation, with a typical 2 mm distance between them. The panels 6 can e.g. be solar panels for converting light energy into electrical energy, or thermal panels for warming up water. The panel mounting system 1 is typically placed on top of a flat roof of a building, e.g. an industrial building, but the invention is not limited thereto, and the panel mounting system 1 of the present invention can e.g. also be placed on other substantially flat surfaces, such as e.g. on the ground.

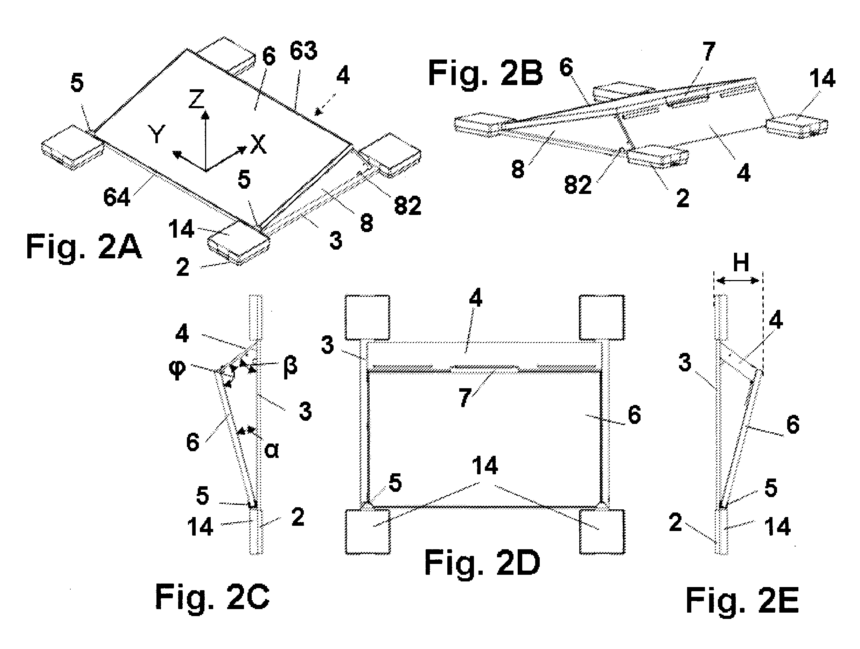

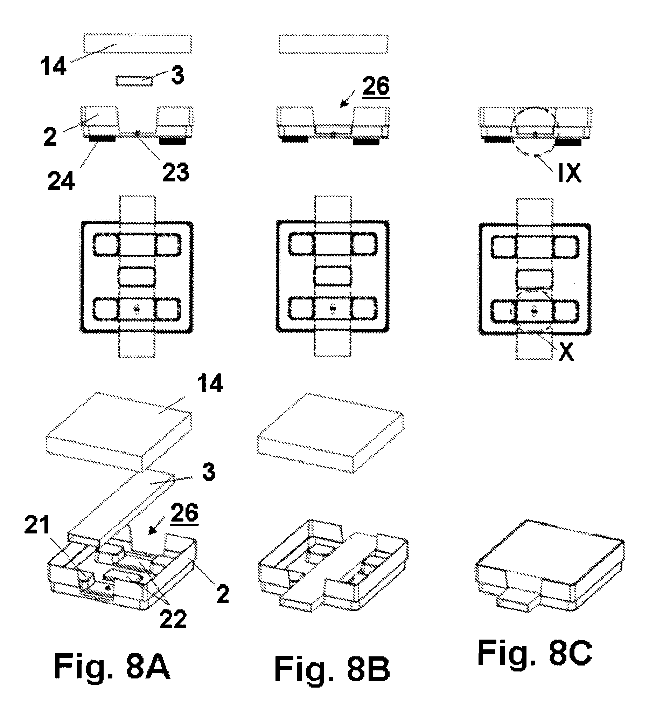

Figures 2A-2E show different views on one element of the panel mounting system 1 of Fig 1, whereby the elongated profiles 3 are placed on mounting bases 2 which are placed on the flat surface 13, e.g. a flat roof. Each mounting base 2 can optionally have a ballast weight 13, preferably positioned on top of the mounting base 2. The rectangular panel 6 is mounted under a predefined angle α to the roof surface 13, e.g. an angle of 15°-25°. The angle β between the wind plate 4 and the roof surface 13 is typically an angle of 50°-56°, preferably 53°. The angle ϕ between the panel 6 and the wind plate 4 is preferably an angle of 102° - 112°, but the invention is not limited thereto, and other angles can also be used. The panel 6 is preferably oriented in such a way that its long sides 63, 64 are parallel to the roof surface 13. This reduces the overall height H (see Fig 2E) of the panel mounting system 1, and limits the forces acting upon the panels 6 under windy conditions, as will be discussed further in Figures 15 and 16. Preferably each mounting base 2 comprises an anti-slip (high friction) material, e.g. a rubber mat or strip 24 (Fig 8A), for preventing it from shifting over the roof surface 13 under windy conditions. An advantage of having mounting bases 2 with anti-slip material 24 attached, as compared to placing loose protection mats underneath, is that it requires less installation time by eliminating the time for unrolling the mat, orienting it, aligning it and cutting it. The element of Fig 2A shows a side panel 8, but this is for illustrative purposes only, as the elements that are not located on the outside of a panel row 11 do not need a side panel 8, so material cost, weight, and effort can be saved by omitting the side panels 8 for all panels 6 in a panel row 11 minus two. Note that the side panels 8 can have an opening 82 for passing electrical cables or wires from the panels 6, e.g. from solar panels or Photovoltaic (PV) panels.

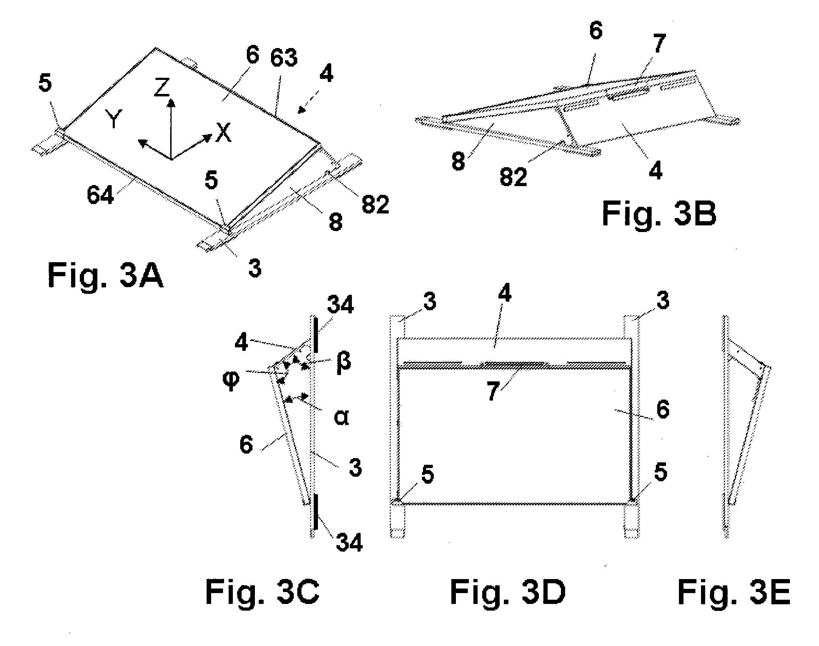

Figures 3A-3E show different views on one element of a variant of the panel mounting system 1 of Fig 1, wherein the elongated profiles 3 are placed on the flat surface 13 without using mounting bases 2. Preferably in this case rubber mats or strips 34 are attached underneath the elongated profiles 3 for preventing them from shifting over the flat roof surface 13 under windy conditions. The rubber strip 34 can e.g. be as wide as the elongated profile 3, e.g. 100 mm wide and 250 mm in length, but other dimensions found suitable by the person skilled in the art will also work. Preferably they are located below the wind plates 4. An advantage of having elongated profiles 3 with anti-slip material 34 attached, as compared to placing loose protection mats underneath the elongated profiles 3, is that it requires less installation time by eliminating the time for unrolling the mat, orienting it, and aligning it with the elongated profiles 3. The rubber mats or strips 34 attached to the elongated profiles 3 can also help to prevent damage to the roof material or help to avoid chemical or contact reactions between the material of the elongated profiles 3 and the roof material.

The rest of the description will further describe the other parts of Fig 2, but everything that is said for Fig 2 also applies to Fig 3, except for the mounting bases 2 and the optional rubber mats or strips 34 underneath the elongated profiles 3, unless explicitly mentioned otherwise.

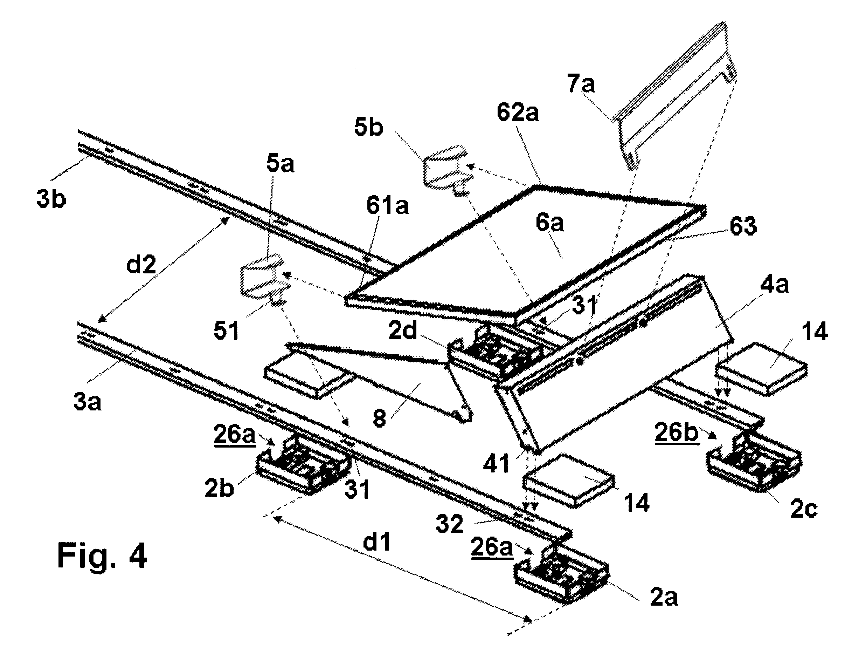

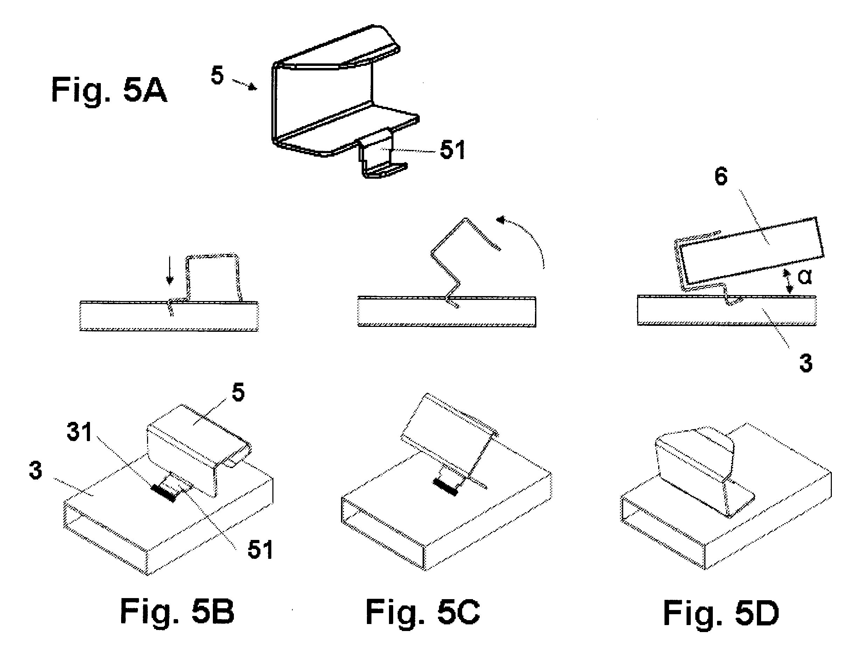

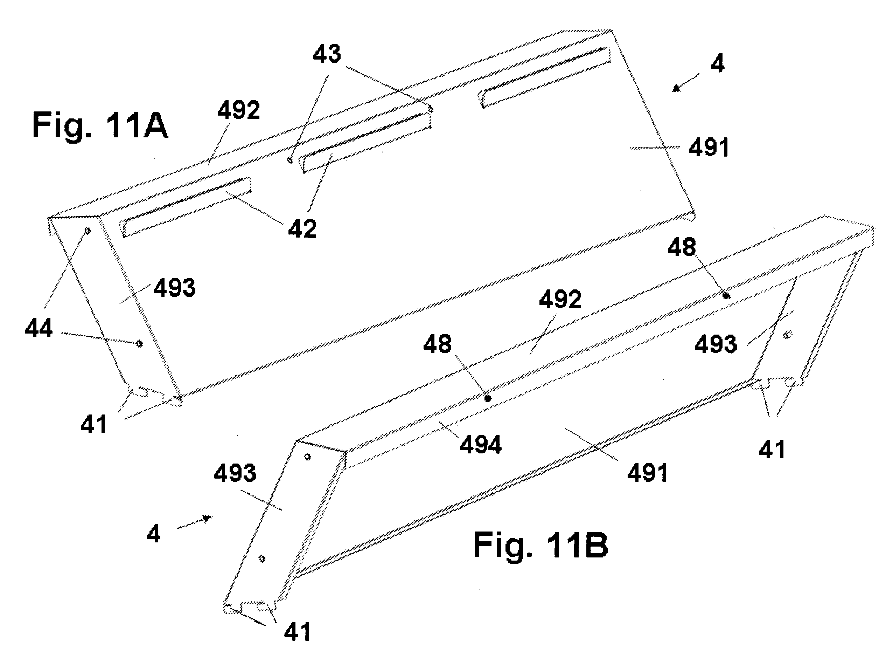

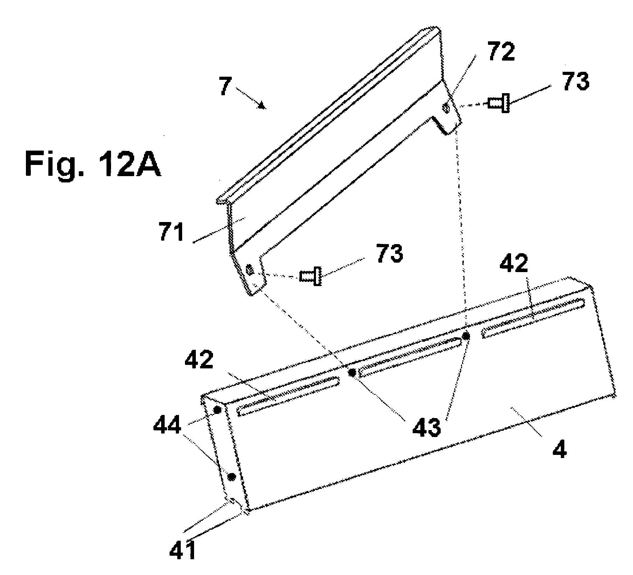

Fig 4 shows an exploded view of the element of Fig 2. This figure will be used to explain how the panel mounting system 1 according to the present invention is assembled. First a plurality of mounting bases 2a, 2b, etc is aligned and placed at a predefined distance d1 from each other, taking into account the number of panel rows 11 to be mounted. Then a first elongated profile 3a is placed in the grooves 26a of the mounting bases 2a, 2b etc, as shown. Then a second plurality of mounting bases 2c, 2d, etc is aligned and placed at a predefined distance d1 from each other, and at a predefined distance d2 from the first elongated profile 3a. Then a second elongated profile 3b is placed in the grooves 26b of the second series of mounting bases 2c, 2d, etc, parallel to the first elongated profile 3a. Then two brackets 5a and 5b are mounted to the elongated profiles 3a and 3b respectively, e.g. by inserting a protrusion 51 of the brackets 5a, 5b into corresponding first openings 31 in the elongated profiles 3a, 3b. This will be described in more detail in Figures 5A-5D. In parallel or thereafter the wind plate 4a can be mounted to the elongated profiles 3a, 3b, by inserting protrusions 41 of the wind plate 4a in corresponding second openings 32 in the elongated profiles 3a, 3b. This will be described in detail in Figures 11A-11E. Then the edges 61, 62 of a panel 6a, e.g. a solar panel are engaged with the brackets 5a, 5b, and the first (upper) side 63 of the panel 6a is placed upon the top of the wind plate 4a. Then the panel 6a is fixed to the wind plate 4a by mounting a holding profile 7a to the wind plate 4a, e.g. by fastening two screws 73. This will be described in detail in Figures 12A-12E. In this way the first panel 6a is mounted under the predefined angle α with respect to the roof surface 13.

For mounting a next panel 6b (not shown) adjacent to the first panel 6a in the same panel row 11, similar steps are followed. First a plurality of additional mounting bases 2e, 2f, etc (not shown) are placed on the roof surface 13, at a distance d2 from the elongated profile 3b, then an additional elongated segment 3c (not shown) is placed on the mounting bases 2e, 2f, etc. A bracket 5c (not shown) is mounted upon the elongated profile 3c. A wind plate 4b (not shown) is mounted on the elongated profiles 3b and 3c. The panel 6b (not shown) is engaged via its first edge 61 b into bracket 5b, and via its second edge 62b in the bracket 5c. Then the second panel 6b is fixed to the second wind plate 4b using a second holding profile 7b (not shown). Note that the bracket 5a, at the end of the panel row 11 holds only one panel 6a, while the bracket 5b holds two panels 6a, 6b. This is true for all the brackets 5 in a panel row 11, except for the brackets 5 at the outer positions of the panel row 11.

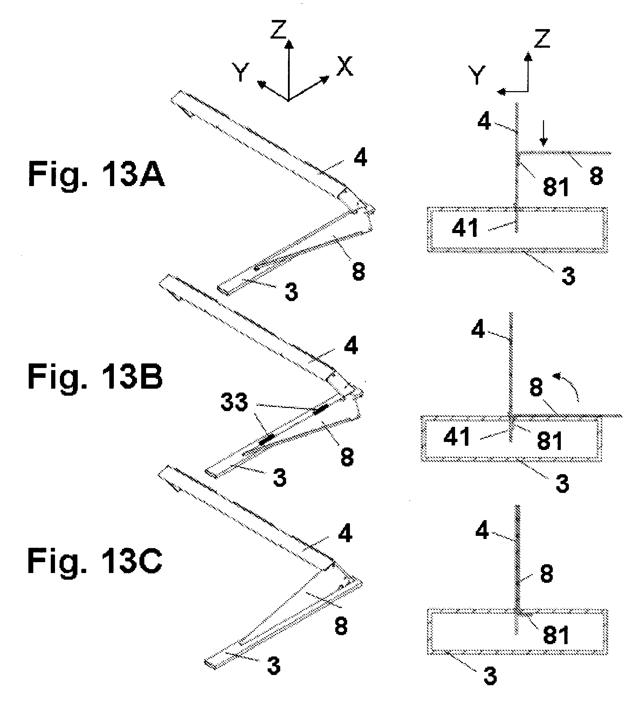

The same procedure is following for each additional panel 6 added to the row 11. When all the panels of a row 11 are mounted, the opposite sides of the panel row 11 are preferably closed by mounting two triangular side panels 8, as will be described in detail in Figures 13A-13C.

When starting a second row 11 (not shown), the mounting bases 2 and elongated profiles 3 need not be placed anymore, as they are already placed. For each panel 6 of the second panel row 11 one bracket 5 is mounted on the elongated profiles 3, except for the first panel 6 for which two brackets 5 are mounted, one in elongated profile 3a the other in the elongated profile 3b. Then a wind plate 4 is mounted to the elongated profiles, a panel 6 is engaged in the brackets 5 and fixed to the wind plate 4 using a holding profile 7, which is fastened to the wind plate 4, e.g. by using two screws or rivets or other fastening means known to the person skilled in the art. And so on for the next rows.

If so desired, extra ballast weight 13 can be placed in the mounting bases 2 on top of the elongated profiles 3, for reducing the risk of shifting or lifting the panel mounting system 1 under heavy wind.

Fig. 5A shows a preferred embodiment of a bracket 5 according to the invention, in perspective view. Preferably the bracket 5 has a protrusion 51 which is curved. Preferably the bracket 5 is made of stainless steel for its rigidity, but other materials known by the person skilled in the art could also be used. Figures 5B-5D show a sequence of steps of how to mount the bracket 5 of Fig 5A to the elongated profile 3, in perspective view (below) and side view (middle). In Fig 5B the bracket 5 is placed on top of the elongated profile 3 and the protrusion 51 of the bracket 5 is inserted in the first opening 31 of the elongated profile 3. In Figures 5C and 5D the bracket 5 is then rotated so as to lock the bracket 5 into the elongated profile 3. The size and shape of the protrusion 51 of the shown bracket 5 is chosen such that when the bracket 5 is fully rotated (see Fig 5D) and resting upon the elongated profile 3, and a panel 6 is inserted in the U-shape of the bracket 5, an angle α is formed between the panel 6 and the elongated profile 3, the angle α preferably being in the range of 15° - 25°.

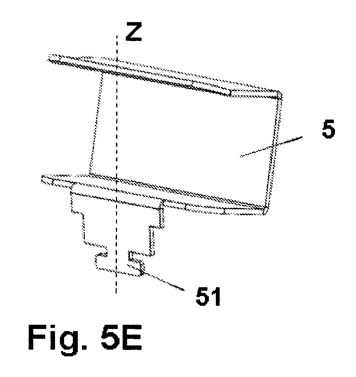

Fig 5E shows an alternative embodiment of the bracket 5, also having a U-shape for holding the panel edge 61, 62 and also having a protrusion 51 for insertion in a corresponding first opening or slit 31 of the elongated profile 6, which slit 31 (not shown) can e.g. have a T-shape. After the protrusion 51 of this bracket 5 is inserted in the slit of the elongated profile 3, the bracket 5 is rotated around the Z-axis or may be shifted in the slit 31 for securing its position in the elongated profile 3. An advantage of the bracket 5 shown in Figures 5A-5D is that it is easier to produce, and in use its position is more stable than the bracket shown in Fig 5E.

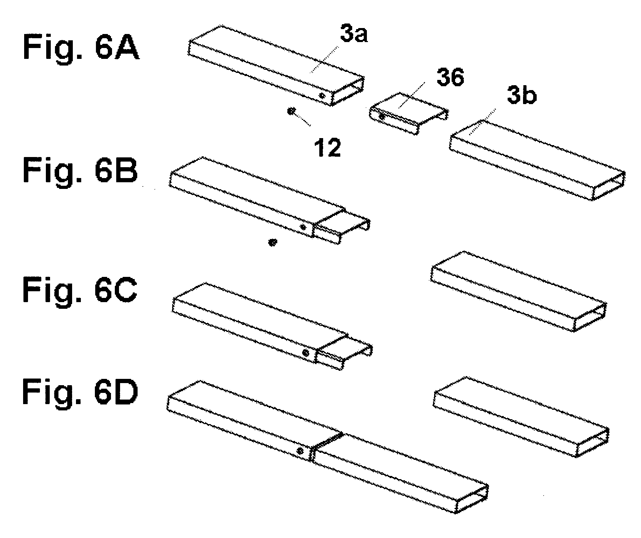

Figures 6A-6D show a sequence of steps of how to interconnect two elongated profiles 3 using a profile interconnect 36 and a screw 12. This is typically done when the length of the elongated profiles 3 (typically 6,0 m max) is not sufficient for supporting all the panel rows 11. It offers the advantage of interconnecting all panel rows 11, so that shifting forces can be shared. This can e.g. also be used when building the panel mounting system 1 around obstacles on the surface 13, such as e.g. a chimney or a skylight window, whereby elongated profiles 3 of other lengths, such as e.g. 1,5 m or 3 m can be used. In this case, each partial row is preferably closed at its outer sides by side panels 8. As shown in Fig 6A, the elongated profiles 3 are preferably hollow rectangular tubes with rounded edges, but the invention will also work with other profiles, such as e.g. a C-profile or a square tube. The profile can e.g. be 100 mm wide to allow stable positioning on the roof surface 13. Preferably the profile interconnect 36 or the elongated profile 3 has a hole with internal screw thread corresponding to that of the screw 12, but a self tapping screw or a rivet or other known fastening means can also be used. In Fig 6B the profile interconnect 36 is inserted into the hollow elongated profile 3a, and is fastened thereto by the screw 12 in Fig 6C. In Fig 6D the second elongated profile 3b is shifted over the profile interconnect 36 but not connected thereto for allowing thermal expansion or compression.

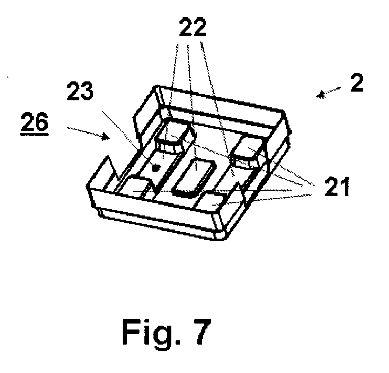

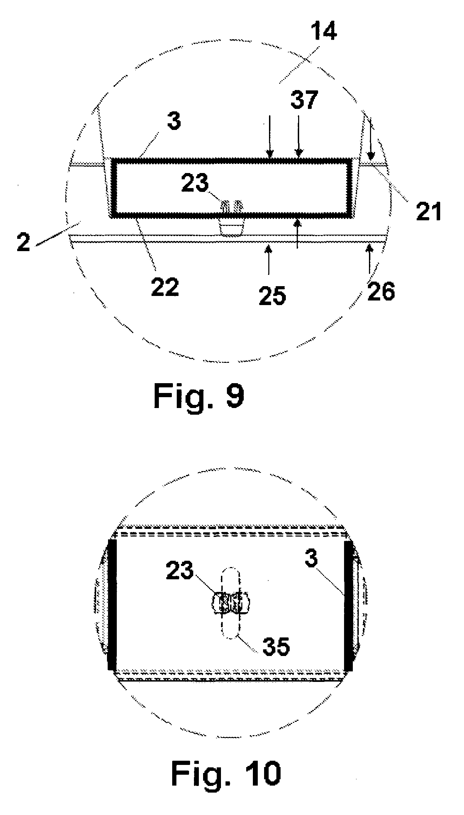

Fig. 7 shows the mounting base of Fig. 1 in more detail. In a preferred embodiment the mounting base 2 has four first support surfaces 21 for supporting optional ballast weight 13, but another number of first support surfaces can also be used, e.g. two or more than four. Placing the ballast weight 13 on top of the mounting base 2 is a very practical and esthetical solution for storing the ballast weight 13 on the panel mounting system 1. The ballast weight 13 can e.g. be concrete tiles. The mounting base 2 of Fig 7 also has three second support surfaces 22 for supporting an elongated profile 3 (not shown in Fig 7), but another number of second supporting surfaces 22 can also be used, such as e.g. one or two or more than three. Preferably one or more of these second supporting surfaces 22 has an optional bulge or protrusion 23 for helping to determine the distance d1 between two mounting bases 2, without using a meter. The idea is to provide elongated profiles 3 having longitudinal slits 35 at predefined distances d1 from each other, and to place and/or shift the elongated profile 3 to the mounting base 2 in such a way that the protrusion 23 fits in the longitudinal slit 35, as will be explained further in Fig 8C and Fig 10. By avoiding the need for measuring, time can be saved during assembly of the panel mounting system 1. The mounting base 2 is preferably made of a plastic material, such as e.g. polypropylene, because it is chemically compatible with most roofing materials such as e.g. bitumen of asphalt, and it can resist a large temperature range (such as e.g. -40°C to +70°C). Such a plastic mounting base 2 is also cheap and lightweight, and can be easily transported and placed on the roof surface 13. The mounting bases 2 are typically 5 cm high and 30 cm x 30 cm large, but other dimensions will also work. The shape shown in Fig 7 also allows for easy and compact stacking.

Figures 8A-8C show (from left to right) a sequence of steps of how to mount an elongated profile 3 in the groove 26 of the mounting base 2 of Fig 7, in a front view (top), an upper view (middle) and perspective view (bottom). The mounting base 2 preferably has a rubber mat or strip 24 underneath to prevent shifting of the mounting base 2 over the roof surface 13. First the mounting base 2 is placed on a substantially flat surface 13, then an elongated profile 3 is placed in the groove 26 of the mounting base 2, in this case it will rest upon the second support surfaces 22 thereof, then (optionally) a ballast weight 13, is placed on top of the elongated profile 3 (Fig 8C). Note that a mounting base 2 as described above, with or without the protrusion 23, and with or without a rubber mat 24 can also be used for other panel mounting systems, different from the panel mounting system 1 of the present invention.

Fig 9 shows a detailed view of part of the top figure of Fig 8C. It shows that preferably the height 25, being the sum of the heights of the first support surface 22 for supporting the elongated profile 3 and the height 37 of the elongated profile 3 is slightly larger than the height 26 of the support surfaces 21 for supporting the ballast weight 13, typically 0,1 - 0,3 mm larger. In this way the ballast weight 13 primarily rests upon the elongated profiles 3, thus preventing vibrations of the elongated profiles 3, and the rest of the panel mounting system 1.

Fig 10 shows another detailed view of part of Fig 8C. It shows that a protrusion 23 of the mounting base 2 is engaged in a longitudinal slit 35 of the elongated profile 3. This allows thermal expansion or compression of the elongated profile 3 under varying temperature conditions.

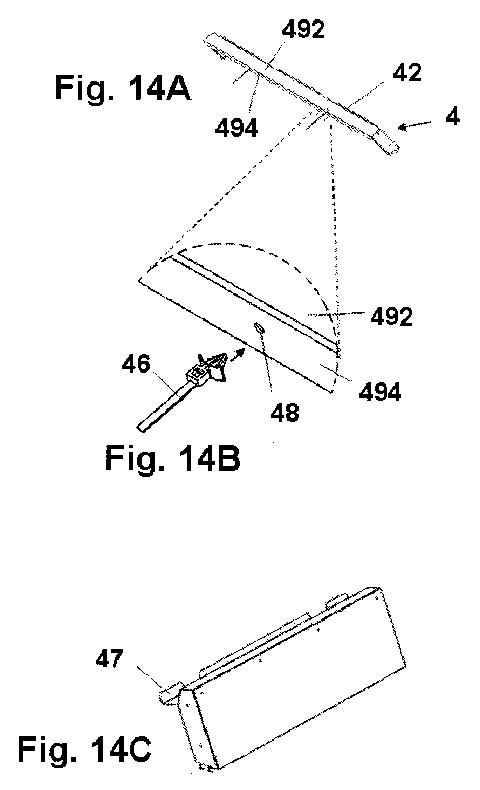

Figures 11A and 11B show a preferred embodiment of the wind plate 4 as used in Fig 4, in perspective view, from the outside of the panel mounting system 1 (Fig 11A) and from the inside of the panel mounting system 1 (Fig 11 B). The wind plate 4 is preferably made of one metal sheet, which is cut and bended so as to form a three-dimensional structure, as shown in the figures. The wind plate 4 shown has a main part 491, two side parts 493 and a top part 492. The angle between the main part 491 and the side parts 493 is substantially 90°, while the angle ϕ between the main part 491 and the top part 492 is preferably an angle between 102°-112°. As will be explained further in Fig 14, preferably the wind plate 4 also has a back part 494. An advantage of this three-dimensional structure is that it improves the structural strength of the wind plate 4, as compared to a simple flat wind plate used in the art. This allows the wind plate 4 to be made of aluminum with e.g. only 1,0 mm thickness, but the invention is not limited thereto and other thicknesses, such as e.g. 1,5 mm and/or other materials, such as e.g. stainless steel can also be used. The wind plate 4 shown has three flap-and-openings 42 for creating turbulence by disturbing air-flow, and for creating an under-pressure by using the venturi-effect, depending on the direction of the wind 17, as will be explained further with respect to the Figures 15 and 16. The wind plate 4 has protrusions 41 for fast and easy mounting in the elongated profiles 3, it has first mounting holes 43, e.g. holes with internal screw thread, for mounting of the holding profile 7, and second mounting holes 44 for mounting the side panels 8 if needed. The latter is only applicable for the wind plates 4 located at the outer ends of a panel row 11, but for fast and easy assembly, the second mounting holes 44 are preferably provided in all the wind plates 4, even if not used.

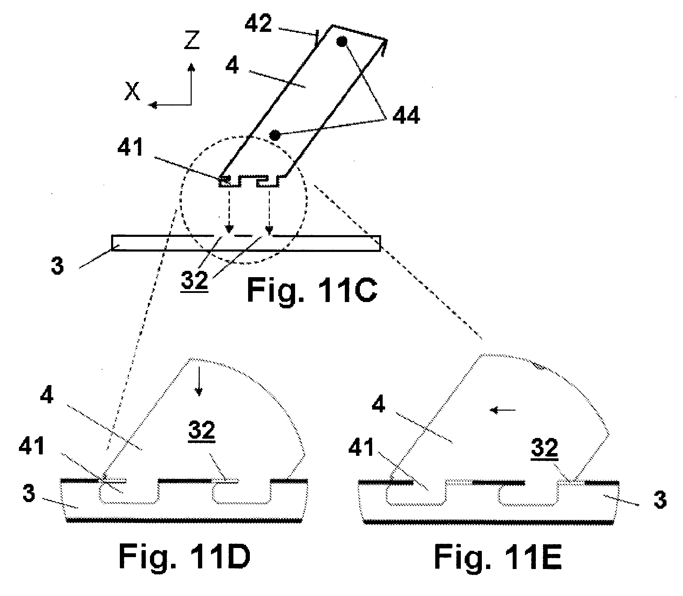

Figures 11C-11E show a sequence of steps of how to mount the wind plate 4 of Fig 2 to the (hollow) elongated profile 3. Fig 11C shows how the protrusions 41 are aligned above the second openings 32 of the elongated profile 3, and are inserted therein (Fig 11 D). In Fig 11E the wind plate 4 is shifted in the length direction of the elongated profile 3 for securing its position in the elongated profile 3. Its position is immobilized when the holding profile 7 is mounted to the wind plate 4. Note that the protrusions 41 are directed away from the brackets 5, and the wind plate 4 is shifted away from the brackets 5 for securing its position in the elongated profiles 3. This gives a more robust panel mounting system 1.

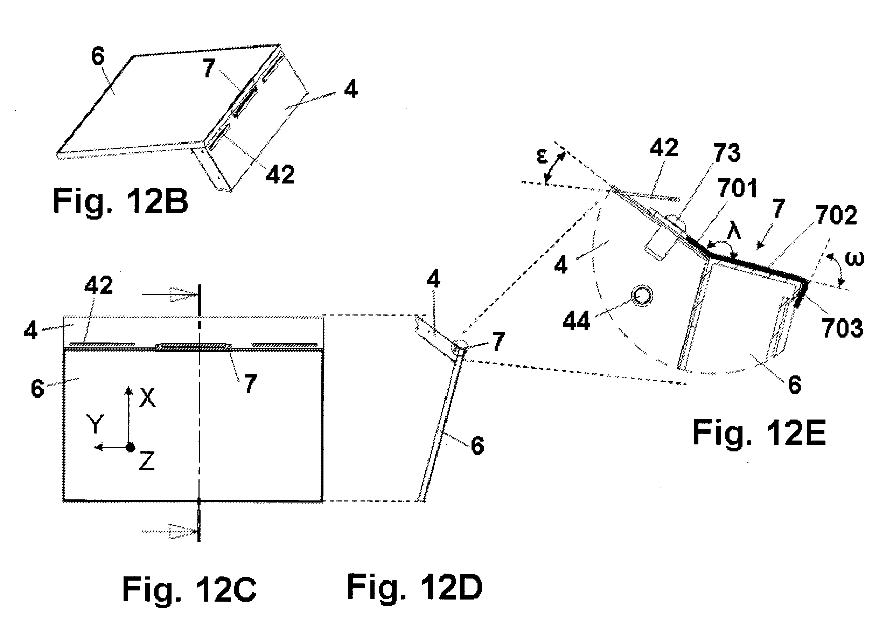

Fig. 12A shows in more detail how the holding profile 7 of Fig 2 can be mounted to the wind plate 4. This can e.g. be done by inserting a screw 73 through mounting holes 72 of the holding profile 7 into corresponding first mounting holes 43 of the wind plate 4. The mounting holes 43 can e.g. have internal screw thread, or the screw can e.g. be a self-tapping screw, but other connection means can also be used, such as e.g. a rivet. Apart from the screws for mounting the side panels 8 in openings 44, as will be discussed further in Fig 13, there are only two screws 73 to be mounted per panel 6 for assembling the panel mounting system 1 of the present invention. As explained above, the other connections, e.g. bracket 5 to elongated profile 3, wind plate 4 to elongated profile 3, side panel 8 to elongated profile 3, etc are established by screwless connections, thereby saving a lot of time during assembly. If used, two additional screws are needed for each panel row 11 for fastening the side panels 8 to the wind plates 4. Figures 12B-12E show how the holding profile 7 of Fig 12A is mounted to the wind plate 4, in perspective view, top view, side view and enlarged side view respectively. In an alternative embodiment, the holding profile 7 need not be located in the middle of the wind plate 4, but can e.g. be located so as to overlap two wind plates 4. The length of the holding profile 7 shown in Figures 12 is approximately 1/3 the size of the panel 6, but other sizes would also work. By choosing a smaller size, material cost and weight is saved.

Fig 12E shows in detail a preferred embodiment of the holding profile 7 of the present invention. It has a bended shape with three segments, the first segment 701 adapted for being fastened against the wind plate 4, the second segment 702 connected to the first segment 701 and showing an angle λ of 158° - 168° thereto for creating turbulence (as will be explained further in Fig 16D), and a third segment 703 connected to the second segment 702 under an angle w of preferably 88° for securing an edge 63 of the panel 6. In this way the parts of the panel mounting system 1 are immobilized by the holding profile 7, in particular the brackets 3, the wind plate 4 and the panel 6.

By locating the flap-and-openings 42 near an upper side of the wind plate 4, natural convection can occur under hot weather conditions, such as in summer. This helps to reduce the temperature underneath the panel mounting system 1, which is good for the efficiency of solar panels, but is also good for limiting the temperature of the roof material under the panels 6.

Figures 13A-13C show a sequence of steps of how to mount a side panel 8 of the panel mounting element of Fig 4, in perspective view (left) and in front view (right). As shown, first the protrusion 81 of the side panel 8 is inserted in one or more third openings 33 of the elongated profile 3. The third opening(s) 33 are typically located between the second openings 32 for receiving the protrusions 41 of the wind plates 4 and the first openings 31 for receiving the protrusion 51 of the brackets 5 (see Fig 4). Then (Fig 13B and Fig 13C) the side panel 8 is tilted towards the wind plate 4, and fixed thereto by conventional fixing means, such as e.g. screws or rivets or the like (not shown). One screw or rivet (or the like) per side panel 8 is sufficient for securing its position, but two could or more screws or rivets or the like can also be used, e.g. for esthetical reasons. The side panels 8 are preferably made of an aluminum sheet of e.g. 1,0 mm thickness.

Figures 14A-14C show a preferred embodiment of a means for holding electrical cables underneath a solar panel 6, by means of a plastic fastening strip 46 (also called "cable tie" or "cable clip") which is inserted in an third opening 48 on the back part 494 of the wind plate 4, and which can be tied around the electrical cables in known ways. Fig 14C shows an alternative embodiment of a wind plate 4 having a cable groove 47 (also called "cable tray"). An advantage of the wind plate of Fig 14A with the plastic fastening strip 46 over the wind plate of Fig 14C is that it requires less metal, thus saving material cost and weight.

Fig 15A shows the air flow over two consecutive panel rows 11 when a wind blows in the direction of the panels 6 over the holding profile 7 and over the wind plate 4, i.e. in the positive X-direction. For a laminar flow, the pressure is high where the density of the flow lines is high, and the pressure is low where the density of the flow lines is low. Looking at the flow lines of Fig 15A, this means that there is an overpressure on top of the panels 6 pushing the panel 6 to the roof surface 13, except near the mounting bases 2, where there is a slight underpressure above the panel 6. Fig 15B shows the forces exerted upon the panels 6 and upon the wind plates 4. To reduce these forces, preferably the sides of the panel rows 11 are closed with side panels 8, as shown in Fig 1, and the wind plates 4 have elongated flap-and-openings openings 42 (see Fig 12A), so that a high wind speed (such as e.g. more than 80 km/h) over the opening 42 will create an underpressure under the panel 6 because of the venturi-effect. This underpressure will pull the panels 6 towards the roof surface 13, and will partly counteract the force exerted upon the wind plate 4. Fig 15C and 15D show the stream lines and the venturi-opening 42 of the wind plate 4 in more detail.

Fig 16A shows the air flow over two consecutive panel rows 11 when a wind blows in the direction of the wind plate 4 over the holding profile 7 and over the panel 6, i.e. in the negative X-direction, in case of solar panels directed to the south, i.e. a wind blowing from the north. In this case the elongated flap-and-openings 42 of the wind plate 4 and the shape of the holding profile 7 serve primarily to create turbulences in the air flow, such that the wind curls over the holding profile 7, thereby preventing a large under-pressure above the panel 6. Fig 16C and 16D show the turbulences caused by the flap-and-opening 42 and the holding profile 7 in more detail. Tests with three flaps 42 of 25 mm x 400 mm per wind plate 4 and oriented under an angle ε w.r.t. the wind plate 4 of about 30° have shown good results. However, another number of flaps 42 can also be used, and the flaps 42 can also have other dimensions, such as e.g. 15 - 60 mm, preferably 20 - 40 mm, more preferably 25 - 30 mm; and other angles of ε w.r.t. the wind plate 4 can also be used, such as e.g. 25° - 35°, preferably 27° - 33°, more preferably about 30°.

Figures 15A-15D and Figures 16A-16D show the beneficial effects of the elongated flap-and-openings 42 of the wind plate 4, and of the angular or curved shape of the holding profile 7, allowing the weight of the panel mounting system 1 of the present invention to be further reduced, so that material and transport costs can be saved, and time for assembly can be further reduced. Wind tunnel tests have shown that the panel mounting system 1 of the present invention without using additional ballast can resist wind speeds of 90 - 210 km/h, depending on the direction of the wind, and can resist wind speeds higher than 150 km/h when using 20 kg/m² ballast weight. Note that the "closure" of the side panels 8 need not be a hermetical connection to achieve the advantage of the venturi-effect.

Wind tunnel tests have shown that between the first panel row 11 (as seen by the wind) and the subsequent panel rows 11 almost no wind occurs near the bottom of the wind plate 4 and close to the roof. In Fig 15A that is near the location of the ballast 92b, 92c, etc. When the wind flows at a high speed (e.g. > 60 km/h) over the panels 6 it will not bend down directly after the holding profile 7. That is why there is no risk that the wind would dive under the panel 6 of the second and subsequent panel rows. Instead, the wind only gently slopes down, as shown in Fig 15A. Because of this the bottom openings between the wind plate 4 and the roof surface 13, in particular between the second side 64 of the panel 6 and the roof surface 13, have virtually no effect on the lifting force exerted upon the panel mounting system 1 by the wind.

Referring to Fig 16A and Fig 16D, when the wind blows from the north (towards the wind plate 4, in the negative X-direction), the air flow is deliberately disturbed by the flap-and-openings 42 of the wind plate 4, so that the wind drops down on the panel 6 shortly after the top edge of the holding profile 7. In this way the lifting effect that would occur if the wind would flow more aerodynamically (i.e. in a more laminar streaming way) over the panel 6, is counteracted by the flap 42.

Preferably the elongated profiles 3 are made of a lightweight metal material, such as e.g. aluminum or an aluminum alloy, to reduce the weight of the panel mounting system 1, thus reducing the requirements of the roof strength, and decreasing the installation time. But profiles made of stainless steel would also work. An advantage of aluminum or an aluminum alloy is that it is more lightweight and cheaper than stainless steel, and is easier and faster to work, e.g. when providing holes or slits therein. Cutting the aluminum elongated profiles at the desired length, or providing holes or slits therein can e.g. be done by laser-cutting. Typical dimensions of the elongated profiles 3 in cross section is e.g. 25 mm x 100 mm, and 2 mm thickness, but elongated profiles 3 with other dimensions can also be used. Preferably the wind plates 4 are made of aluminum sheets of 1,0 mm thickness for the same reasons, but a wind plate with another thickness or made of stainless steel would also work. The total weight of the panel mounting system 1 of the present invention (without panels 6 and without ballast weight 13) is approximately 2,42 kg/m²

The typical time required for assembling the panel mounting system 1 of the present invention is less than four "4" minutes per panel 6 on average, as compared to more than double this time for conventional panel mounting systems. The wind plates 4, the side plates 8, and the brackets 5 can be easily produced by cutting and bending metal plates.

### EXAMPLES OF PREFERRED EMBODIMENTS:

In a first example according to the invention, the following angles are used: α=15°, β=53°, ϕ=112°, λ=158°, ε=27°, ω=89°.

In a second example according to the invention, the following angles are used: α=25°, β=53°, ϕ=102°, λ=168°, ε=30°, ω=88°.

In a third example according to the invention, the following angles are used: α=20°, β=53°, ϕ=107°, λ=163°, ε=33°, ω=87°.

## Claims

1. A panel mounting system (1) for mounting a plurality of panels (6) on a substantially flat surface (13) and under a predefined angle (α) thereto, comprising:
- a plurality of elongated profiles (3) placed parallel to and at a predefined distance (d2) from each other on the surface (13);
- a plurality of wind plates (4) mounted to the elongated profiles (3), each wind plate being adapted for supporting a first side (63) of the panel (6) to prevent it from bending;
- a plurality of panels (6) mounted to the wind plates (4) at the first side (63), and to the elongated profiles (3) at a second side (64) of the panels (6), opposite the first side (63);
**characterised in that**
- the panel mounting system (1) further comprises a plurality of brackets (5), each bracket (5a, 5b) being adapted to be engaged with one elongated profile (3a, 3b) via first screwless cooperating engaging means (31, 51), and comprising a U-shape for holding an edge (61, 62) of at least one panel (6);
- each wind plate (4) being oriented in a plane transverse to the elongated profiles (3), and being engaged with two parallel elongated profiles (3a, 3b) via second screwless cooperating engaging means (32, 41);
- the panel mounting system (1) further comprises a plurality of holding profiles (7) mounted to the wind plates (4) for securing the panels (6) to the wind plates (4), thereby immobilizing the parts (4, 5, 6) of the panel mounting system.

2. The panel mounting system (1) according to claim 1, wherein the first screwless cooperating engaging means (31, 51) comprises a protrusion (51) of the bracket (5) adapted for fitting into a first opening (31) of the elongated profile (3).

3. The panel mounting system (1) according to claim 2, wherein the protrusion (51) of the bracket (5) has a particular shape so that the bracket (5) needs to be tilted or rotated when the protrusion (51) is inserted in the first opening (31) of the elongated profile (3), and is prevented from tilting or rotating after it is engaged with the panel (6).

4. The panel mounting system (1) according to claim 3, wherein the protrusion (51) of the bracket (5) has a curved or bended shape.

5. The panel mounting system (1) according to any one of the previous claims, wherein the second screwless cooperating engaging means (32, 41) comprises a protrusion (41) of the wind plate (4) adapted for fitting into a second opening (32) of the elongated profile (3).

6. The panel mounting system (1) according to any one of the previous claims, wherein each elongated profile (3) comprises a rubber mat (34) for easy placement of the elongated profiles on top of the surface (13), and for preventing it from shifting over the surface (13) under windy conditions.

7. The panel mounting system (1) according to any one of the claims 1-5, further comprising a plurality of mounting bases (2) adapted to be placed on the surface (13), each mounting base adapted for supporting an elongated profile (3) to allow water present on the surface (13) to flow under the elongated profile (3).

8. The panel mounting system (1) according to claim 7, wherein each mounting base (2) comprises a rubber mat (24) for preventing it from shifting over the surface (13) under windy conditions.

9. The panel mounting system (1) according to claim 7 or 8, wherein each mounting base (2) has a shape for holding ballast weight (14) placed on top of the elongated profiles (3) to prevent a wind (17) from lifting the mounting system (1), and wherein the mounting base (2) has a protrusion (23) adapted for engaging in a longitudinal slit (35) of the elongated profile (3) for allowing the elongated profile to expand or shrink in the longitudinal direction (X) under varying temperature conditions.

10. The panel mounting system (1) according to any one of the previous claims, wherein the holding profiles (7) have an angular or curved surface showing an angle (A) of 158° - 168° to the wind plates (4) when mounted thereto, for increasing turbulence when the wind (17) blows towards the wind plates (4) and over the panels (6), for reducing a lifting force acting upon the panels (6) caused by the wind (17).

11. The panel mounting system (1) according to any one of the previous claims, wherein:
- the panels (6) are organized in one or more panel rows (11), each panel row comprising at least one panel (6) and further comprising two side panels (8a, 8b) of a substantially triangular shape, each side panel (8a, 8b) being located at an outer end of the panel row (11), and being mounted to a corresponding elongated profile (3a, 3b) using third screwless cooperating engaging means (33, 81) and to a wind plate (4a, 4b);
- each wind plate (4) has at least one elongated flap-and-opening (42) oriented substantially parallel to the surface (13), for creating an under-pressure underneath the panel (6) due to the venturi-effect when the wind (17) blows over the panel (6), over the holding profile (7) and over the flap-and-opening (42).

12. The panel mounting system (1) according to claim 11, wherein the third screwless cooperating engaging means (33, 81) comprises a protrusion (81) of the side panel (8a) adapted for fitting into a third opening (33) of the elongated profile (3).

13. The panel mounting system (1) according to any one of the previous claims, wherein the panels (6) are solar panels or thermal panels.

14. The panel mounting system (1) according to any one of the previous claims, wherein the panels (6) are rectangular panels having two long sides (63, 64) and two short sides (65), and are oriented in such a way that the long sides (63, 64) of the panels (6) are substantially parallel to the substantially flat surface (13).

15. The panel mounting system (1) according to any one of the previous claims, wherein the substantially flat surface (13) is a flat roof of a building.

## Patentansprüche

1. Plattenanbringungssystem (1) zum Anbringen von mehreren Platten (6) auf einer im Wesentlichen flachen Oberfläche (13) und in einem vorgegebenen Winkel (α) dazu, umfassend:
- mehrere gestreckte Profile (3), die parallel und in einem vorgegebenen Abstand (d2) zueinander auf der Oberfläche (13) angeordnet sind;
- mehrere Windplatten (4), die an den gestreckten Profilen (3) angebracht sind, wobei jede Windplatte dazu geeignet ist, eine erste Seite (63) der Platte (6) zu stützen, um zu verhindern, dass sie sich biegt;
- mehrere Platten (6), die an der ersten Seite (63) an den Windplatten (4) und an einer zweiten Seite (64) der Platten (6), die der ersten Seite (63) gegenüberliegt, an den gestreckten Profilen (3) angebracht sind;
**dadurch gekennzeichnet, dass**
- das Plattenanbringungssystem (1) ferner mehrere Klammern (5) umfasst, wobei jede Klammer (5a, 5b) dazu geeignet ist, über erste schraubenlose, zusammenwirkende Eingriffsmittel (31, 51) mit einem gestreckten Profil (3a, 3b) in Eingriff gebracht zu sein, und eine U-Form zum Halten einer Kante (61, 62) von zumindest einer Platte (6) umfasst;
- jede Windplatte (4) in einer Ebene ausgerichtet ist, die schräg zu den gestreckten Profilen (3) verläuft, und über zweite schraubenlose, zusammenwirkende Eingriffsmittel (32, 41) mit zwei parallelen gestreckten Profilen (3a, 3b) in Eingriff gebracht ist;
- das Plattenanbringungssystem (1) ferner mehrere Halteprofile (7) umfasst, die an den Windplatten (4) zum Befestigen der Platten (6) an den Windplatten (4) angebracht sind, wodurch die Teile (4, 5, 6) des Plattenanbringungssystems festgestellt sind.

2. Plattenanbringungssystem (1) nach Anspruch 1, wobei das erste schraubenlose, zusammenwirkende Eingriffsmittel (31, 51) einen Vorsprung (51) der Klammer (5) umfasst, der zum Passen in eine erste Öffnung (31) des gestreckten Profils (3) geeignet ist.

3. Plattenanbringungssystem (1) nach Anspruch 2, wobei der Vorsprung (51) der Klammer (5) eine besondere Form aufweist, sodass die Klammer (5) gekippt oder gedreht werden muss, wenn der Vorsprung (51) in die erste Öffnung (31) des gestreckten Profils (3) eingeführt wird, und sie am Kippen oder Drehen gehindert ist, nachdem sie mit der Platte (6) in Eingriff gebracht ist.

4. Plattenanbringungssystem (1) nach Anspruch 3, wobei der Vorsprung (51) der Klammer (5) eine gekrümmte oder gebogene Form aufweist.

5. Plattenanbringungssystem (1) nach einem der vorhergehenden Ansprüche, wobei das zweite schraubenlose, zusammenwirkende Eingriffsmittel (32, 41) einen Vorsprung (41) der Windplatte (4) aufweist, der zum Passen in eine zweite Öffnung (32) des gestreckten Profils (3) geeignet ist.

6. Plattenanbringungssystem (1) nach einem der vorhergehenden Ansprüche, wobei jedes gestreckte Profil (3) eine Gummimatte (34) zur leichten Anordnung der gestreckten Profile (3) auf der Oberfläche (13) und zum Verhindern, dass sie sich unter windigen Bedingungen auf der Oberfläche (13) verschieben, aufweist.

7. Plattenanbringungssystem (1) nach einem der Ansprüche 1 bis 5, ferner umfassend mehrere Anbringungsbasen (2), die dazu geeignet sind, auf der Oberfläche (13) angeordnet zu sein, wobei jede Anbringungsbasis dazu geeignet ist, ein gestrecktes Profil (3) zu stützen, um zu ermöglichen, dass Wasser, das auf der Oberfläche (13) vorhanden ist, unter dem gestreckten Profil (3) fließt.

8. Plattenanbringungssystem (1) nach Anspruch 7, wobei jede Anbringungsbasis (2) eine Gummimatte (24) umfasst, um zu verhindern, dass sie sich unter windigen Bedingungen auf der Oberfläche (13) verschiebt.

9. Plattenanbringungssystem (1) nach einem der Ansprüche 7 oder 8, wobei jede Anbringungsbasis (2) eine Form zum Halten von Ballastgewicht (14) aufweist, das auf den gestreckten Profilen (3) angeordnet ist, um zu verhindern, dass das Anbringungssystem (1) vom Wind (17) angehoben wird,
und wobei die Anbringungsbasis (2) einen Vorsprung (23) aufweist, der zum Eingreifen in einen Längsschlitz (35) des gestreckten Profils (3) geeignet ist, um zu ermöglichen, dass sich das gestreckte Profil unter wechselnden Temperaturbedingungen in der Längsrichtung (X) ausdehnt oder zusammenzieht.

10. Plattenanbringungssystem (1) nach einem der vorhergehenden Ansprüche, wobei die Halteprofile (7) eine winklige oder gekrümmte Oberfläche aufweisen, die einen Winkel (A) von 158° bis 168° zu den Windplatten (4) aufweisen, wenn sie daran angebracht sind, zum Erhöhen der Turbulenz, wenn der Wind (17) zu den Windplatten (7) hin und über die Platten (6) bläst, zum Reduzieren einer Hubkraft, die auf die Platten (6) einwirkt und durch den Wind (17) verursacht ist.

11. Plattenanbringungssystem (1) nach einem der vorhergehenden Ansprüche, wobei:
- die Platten (6) in einer oder mehr Plattenreihen (11) organisiert sind, wobei jede Plattenreihe zumindest eine Platte (6) und ferner zwei Seitenplatten (8a, 8b) mit einer im Wesentlichen dreieckigen Form umfasst, wobei sich jede Seitenplatte (8a, 8b) an einem äußeren Ende der Plattenreihe (11) befindet und an einem entsprechenden gestreckten Profil (3a, 3b) unter Benutzung von dritten schraubenlosen, zusammenwirkenden Eingriffsmitteln (33, 81) und an einer Windplatte (4a, 4b) angebracht ist;
- jede Windplatte (4) zumindest eine gestreckte Klappe/Öffnung (42), die im Wesentlichen parallel zu der Oberflache (13) ausgerichtet ist, zum Erzeugen eines Unterdrucks unter der Platte (6) aufgrund des Venturi-Effekts, wenn der Wind (17) über die Platte (6), über das Halteprofil (7) und über die Klappe/Öffnung (42) bläst, aufweist.

12. Plattenanbringungssystem (1) nach Anspruch 11, wobei das dritte schraubenlose, zusammenwirkende Eingriffsmittel (33, 81) einen Vorsprung (81) der Seitenplatte (8a) umfasst, der zum Passen in eine dritte Öffnung (33) des gestreckten Profils (3) geeignet ist.

13. Plattenanbringungssystem (1) nach einem der vorhergehenden Ansprüche, wobei die Platten (6) Solarzellenplatten oder Thermoplatten sind.

14. Plattenanbringungssystem (1) nach einem der vorhergehenden Ansprüche, wobei die Platten (6) rechteckige Platten mit zwei langen Seiten (63, 64) und zwei kurzen Seiten (65) sind und derart ausgerichtet sind, dass die langen Seiten (63, 64) der Platten (6) im Wesentlichen parallel zu der im Wesentlichen flachen Oberfläche (13) verlaufen.

15. Plattenanbringungssystem (1) nach einem der vorhergehenden Ansprüche, wobei die im Wesentlichen flache Oberfläche (13) ein Flachdach eines Gebäudes ist.

## Revendications

1. Système de montage (1) de panneaux pour monter une pluralité de panneaux (6) sur une surface (13) sensiblement plate et à un angle prédéfini (α) par rapport à celle-ci, comprenant :
- une pluralité de profilés allongés (3) placés parallèlement entre eux et à une distance prédéfinie (d2) les uns des autres sur la surface (13) ;
- une pluralité de plaques pare-vent (4) montées sur les profilés allongés (3), chaque plaque pare-vent étant adaptée pour supporter un premier côté (63) du panneau (6) pour l'empêcher de plier ;
- une pluralité de panneaux (6) montés sur les plaques pare-vent (4) du premier côté (63) et sur les profilés (3) allongés du deuxième côté (64) des panneaux (6) opposé au premier côté (63) ;
**caractérisé en ce que**
- le système de montage (1) de panneaux comprend en outre une pluralité de consoles (5), chaque console (5a, 5b) étant adaptée pour être mise en prise avec un profilé allongé (3a, 3b) par l'intermédiaire de premiers moyens d'accouplement (31, 51) coopérant sans vis et comprenant une forme en U pour tenir un bord (61, 62) d'au moins un panneau (6) ;
- chaque plaque pare-vent (4) étant orientée dans un plan transversal aux profilés allongés (3) et étant mise en prise avec deux profilés allongés (3a, 3b) parallèles par l'intermédiaire de deuxièmes moyens d'accouplement (32, 41) coopérant sans vis ;
- le système de montage (1) de panneaux comprend en outre une pluralité de profilés de retenue (7) montés sur les plaques pare-vent (4) pour fixer les panneaux (6) aux plaques pare-vent (4), immobilisant ainsi les parties (4, 5, 6) du système de montage de panneaux.

2. Système de montage (1) de panneaux selon la revendication 1, dans lequel le premier moyen d'accouplement (31, 51) coopérant sans vis comprend une protubérance (51) de la console (5) adaptée pour s'emboîter dans une première ouverture (31) du profilé allongé (3).

3. Système de montage (1) de panneaux selon la revendication 2, dans lequel la protubérance (51) de la console (5) a une forme particulière de sorte que la console (5) doit être inclinée ou tournée quand la protubérance (51) est insérée dans la première ouverture (31) du profilé allongé (3) et est empêchée de s'incliner ou de tourner après qu'elle a été mise en prise avec le panneau (6).

4. Système de montage (1) de panneaux selon la revendication 3, dans lequel la protubérance (51) de la console (5) a une forme courbe ou pliée.

5. Système de montage (1) de panneaux selon l'une quelconque des revendications précédentes, dans lequel le deuxième moyen d'accouplement (32, 41) coopérant sans vis comprend une protubérance (41) de la plaque pare-vent (4) adaptée pour s'emboîter dans une deuxième ouverture (32) du profilé allongé (3).

6. Système de montage (1) de panneaux selon l'une quelconque des revendications précédentes, dans lequel chaque profilé allongé (3) comprend un tapis en caoutchouc (34) pour le placement aisé des profilés allongés sur le dessus de la surface (13) et pour l'empêcher de bouger sur la surface (13) par grand vent.

7. Système de montage (1) de panneaux selon l'une quelconque des revendications 1 - 5, comprenant en outre une pluralité de bases de montage (2) adaptées pour être placées sur la surface (13), chaque base de montage adaptée pour supporter un profilé allongé (3) pour permettre à l'eau présente sur la surface (13) de couler en dessous du profilé allongé (3).

8. Système de montage (1) de panneaux selon la revendication 7, dans lequel chaque base de montage (2) comprend un tapis en caoutchouc (24) pour l'empêcher de bouger sur la surface (13) par grand vent.

9. Système de montage (1) de panneaux selon la revendication 7 ou 8, dans lequel chaque base de montage (2) a une forme pour retenir un poids de ballast (14) placé sur le dessus des profilés allongés (3) pour empêcher un vent (17) de soulever le système de montage (1) et dans lequel la base de montage (2) a une protubérance (23) adaptée pour s'engager dans une fente longitudinale (35) du profilé allongé (3) pour permettre au profilé allongé de se dilater ou de se rétracter dans la direction longitudinale (X) dans des conditions de température variables.

10. Système de montage (1) de panneaux selon l'une quelconque des revendications précédentes, dans lequel les profilés de retenue (7) ont une surface angulaire ou courbe présentant un angle (A) de 158° - 168° par rapport aux plaques pare-vent (4) quand ils sont montés sur celles-ci pour accroître la turbulence quand le vent (17) souffle vers les plaques pare-vent (4) et au-dessus les panneaux (6), pour réduire une force de levage agissant sur les panneaux (6) due au vent (17).

11. Système de montage (1) de panneaux selon l'une quelconque des revendications précédentes, dans lequel :
- les panneaux (6) sont organisés en une ou plusieurs rangées (11) de panneaux, chaque rangée de panneaux comprenant au moins un panneau (6) et comprenant en outre deux panneaux latéraux (8a, 8b) de forme sensiblement triangulaire, chaque panneau latéral (8a, 8b) étant situé à une extrémité extérieure de la rangée (11) de panneaux, et étant monté sur un profilé allongé (3a, 3b) correspondant en utilisant des troisièmes moyens d'accouplement (33, 81) coopérant sans vis et sur une plaque de base (4a, 4b) ;
- chaque plaque pare-vent (4) a au moins un clapet-et-ouverture (42) orienté de manière sensiblement parallèle à la surface (13) pour créer une sous-pression en dessous du panneau (6) due à l'effet Venturi quand le vent (17) souffle au-dessus du panneau (6), au-dessus du profilé de retenue (7) et au-dessus du clapet-et-ouverture (42).

12. Système de montage (1) de panneaux selon la revendication 11, dans lequel le troisième moyen d'accouplement (33, 81) coopérant sans vis comprend une protubérance (81) du panneau latéral (8a) adaptée pour s'emboîter dans une troisième ouverture (33) du profilé allongé (3).

13. Système de montage (1) de panneaux selon l'une quelconque des revendications précédentes, dans lequel les panneaux (6) sont des panneaux solaires ou des panneaux thermiques.

14. Système de montage (1) de panneaux selon l'une quelconque des revendications précédentes, dans lequel les panneaux (6) sont des panneaux rectangulaires ayant deux côtés longs (63, 64) et deux côtés courts (65) et sont orientés de telle manière que les côtés longs (63, 64) des panneaux (6) soient sensiblement parallèles à la surface (13) sensiblement plate.

15. Système de montage (1) de panneaux selon l'une quelconque des revendications précédentes, dans lequel la surface (13) sensiblement plate est un toit plat d'un bâtiment.
